# EUROPEAN PATENT SPECIFICATION

(11) **EP 3 984 839 B1**
(45) Date of publication and mention of the grant of the patent: **31.01.2024**
(21) Application number: 20202432.9
(22) Date of filing: 16.10.2020
(51) Int. Cl.: B60S 1/04, F16B 21/07, F16B 21/06

(54) **SECURING DEVICE FOR A WINDSCREEN WIPER MOUNTING ASSEMBLY**
BEFESTIGUNGSVORRICHTUNG FÜR EINE SCHEIBENWISCHERMONTAGEANORDNUNG
DISPOSITIF DE FIXATION POUR LE MONTAGE D'ESSUIE-GLACE

(43) Date of publication of application: 20.04.2022
(73) Proprietor: Valeo Systèmes d'Essuyage, 78322 Le Mesnil Saint Denis (FR)
(72) Inventor: KRUPA, Krzysztof, 78320 LE MESNIL SAINT DENIS (FR); SZYMKOWICZ, Kamil, 78320 LE MESNIL SAINT DENIS (FR); BELTRAN, Cecilia Sarahi, 78320 LE MESNIL SAINT DENIS (FR); KUCHLY, Nicolas, 78320 LE MESNIL SAINT DENIS (FR); CHABANNES, Benjamin, 78320 LE MESNIL SAINT DENIS (FR); GARIBALDI, Vincent, 78320 LE MESNIL SAINT DENIS (FR); RENOUX, Pascal, 78320 LE MESNIL SAINT DENIS (FR)
(74) Representative: Valeo Visibility

(56) References cited:
- EP-A1- 0 685 657
- EP-A1- 1 906 032
- EP-A2- 0 952 053
- DE-A1-102004 009 302
- DE-A1-102014 225 877

## Description

### TECHNICAL FIELD

The present invention relates to components for a wiper mounting assembly for a motor vehicle, and more particularly to a securing device for a windscreen wiper mounting assembly for a windscreen of a motor vehicle, and a corresponding windscreen wiper mounting assembly.

### STATE OF THE ART

Windscreen wiper are used in motor vehicle and the like, during rainy condition and also for cleaning the windscreen of any dirt or water particles to enable the motor vehicle operator to see properly through the front and rear windscreens of the motor vehicle.

These windscreen wipers are generally fixed to the vehicle body by using connectors. For example, rear windscreen wipers are typically screwed or bolted to the vehicle body, which is quite complex and time consuming due to the use of many parts such as screws and the need of installation tools.

Furthermore, a windscreen wiper mounting assembly comprises generally several separate parts before the final installation to the vehicle body. The transportation of these separate parts requires often several costly separate packaging. An example of securing device for a windscreen wiper mounting assembly is described in the document DE-A-102014225877.

There is thus a need to provide a low-complexity and cost saving technical solution that makes it possible to ensure not only a robust and compact windscreen wiper mounting assembly before the final installation but also a rapid and tool-free installation of the windscreen wiper mounting assembly.

### SUMMARY OF THE INVENTION

The invention provides a solution for solving at least partially this problem.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

According to one aspect, a securing device for a windscreen wiper mounting assembly is proposed.

The securing device comprises
a grommet comprising a through orifice and a first expandable end disposed in one end of the through orifice,
a middle connector comprising a first fixing means and an elongated segment being hollow and comprising a second expandable end adapted to be inserted into the through orifice; and
a locking member comprising a second fixing means and a pin adapted to be inserted into the elongated segment.

The securing device is adapted to present
a first configuration in which the pin is partly inserted into the elongated segment which is inserted into the first expandable end and the second fixing means engages the first fixing means so as to fix the locking member to the middle connector, and
a second configuration in which the pin is pushed through the second expandable end which is inserted into the first expandable end so as to deform the first and second expandable ends.

Such securing device has only three separate parts and these separate parts are configured to be in an assembled state either in the first configuration, for example a delivery configuration or a transport configuration before the final installation or in the second configuration, for example a secured configuration after the installation.

The use of the first and second fixing means allow advantageously a reliable connection between the middle connector and the locking member in the first configuration to make the secure device compact and practical for a transport or a delivery.

When the pin is not pushed through the first and second expandable ends, the first and second expandable ends are adapted to be fitted in an installation hole in the vehicle body.

Once the first and second expandable ends pass through the installation hole, the first and second expandable ends can be deformed or be expanded by pushing the pin through the first and second expandable ends.

In such way, the secure device can be advantageously secured to the vehicle body. When the secure device is used in a windscreen wiper mounting assembly, the windscreen wiper mounting assembly can thus be easily secured to the vehicle body of a motor vehicle without using any tool.

For example, the first expandable end can comprise a plurality of first clasping lips and the second expandable end can comprise a plurality of second clasping lips configured to be inserted into the first clasping lips.

According to an embodiment, the first expandable end comprises six first clasping lips and the second expandable end comprises three second clasping lips.

According to an embodiment, the first fixing means comprise a first peripheral ring and a second peripheral ring, and the second fixing means comprises a first base having a plurality of first locking clips configured to engage the first peripheral ring in the first configuration and the second peripheral ring in the second configuration.

The use of the first and second peripheral rings allows advantageously a stable engagement of the first and second fixing means respectively in the first and second configuration. In such way, the securing device remains always in the assembled state either before or after its installation to the vehicle body.

The first peripheral ring can for example have at least one first protuberance to cooperate with the locking clips, which can advantageously limit free rotation of the locking member in the first configuration, in other words, in the delivery configuration.

According to one embodiment, the second fixing means comprises further an auxiliary base having a dimension greater than that of the first base and a plurality of assembly clips shorter than the first locking clips.

Advantageously, such assembly clips can be used to cooperate with limitation means such as a locking ring for securing the engagement between the first peripheral rings and locking clips in the first configuration.

According to another embodiment, the second fixing means comprise a third peripheral ring and a fourth peripheral ring, and the first fixing means comprises a second base having a plurality of second locking clips configured to engage the third peripheral ring in the first configuration and the fourth peripheral ring in the second configuration.

By way of example and without limitation, the third peripheral ring has at least one second protuberance to cooperate with the locking clips for limiting free rotation of the locking member in the first configuration.

According to an embodiment, the locking member comprises a sliding groove and an abutment groove on the outer surface of the pin and the middle connector comprises a locking protuberance on the inner surface of the elongated segment. The locking protuberance is configured to pass through the sliding groove when the pin is inserted into the elongated segment and to be maintained in the abutment groove in the first configuration.

Such engagement between the locking member and the elongated segment allow limiting translational movement of the locking member in the first configuration.

The grommet can for example be made of a first expandable material and the middle connector can for example be made of a second expandable material. The second expandable material can be less expandable than the first expandable material.

According to an embodiment, the first expandable material is rubber and the second expandable material is plastic.

According to another aspect, a windscreen wiper mounting assembly for a motor vehicle is proposed. The windscreen wiper mounting assembly comprises a wiper motor, a support frame configured to maintain the wiper motor and at least one securing device as defined above.

According to an embodiment, the support frame comprises at least one locking ring having an inner dimension corresponding to the outer dimension of the first locking clips, each locking ring being configured to be fixed to the support frame and to encircle the first locking clips of a corresponding securing device when the corresponding securing device is in the first configuration, each locking ring being further configured to engage the assembly clips of the corresponding securing device when the corresponding securing device is in the second configuration.

Such locking ring allows advantageously avoiding any eventual disengagement of the first locking clips with respect to the first peripheral ring in the first configuration.

By way of example, the windscreen wiper mounting assembly can be a windscreen wiper mounting assembly for a rear windscreen of a motor vehicle.

According to another aspect, a motor vehicle comprising a windscreen wiper mounting assembly as defined above is proposed.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a perspective view of an example of motor vehicle comprising at least a windscreen wiper mounting assembly.
Figure 2 shows a perspective view of an example of rear windscreen wiper mounting assembly.
Figure 3 shows an assembled view of an example of securing means for a windscreen wiper mounting assembly.
Figure 3a shows an exploded view of the securing means of figure 3.
Figure 4 shows an exploded view of another example of middle connector and locking member of the securing means.
Figure 5 shows an example of locking ring with a locking member.
Figure 6 shows an example of securing means in a first configuration of the locking member of figure 5.
Figure 7 shows an example of securing means in a second configuration of the locking member of figure 5.

### DETAILED DESCRIPTION OF THE INVENTION

Hereinafter, embodiments of the present invention will be described with reference to the accompanying drawings.

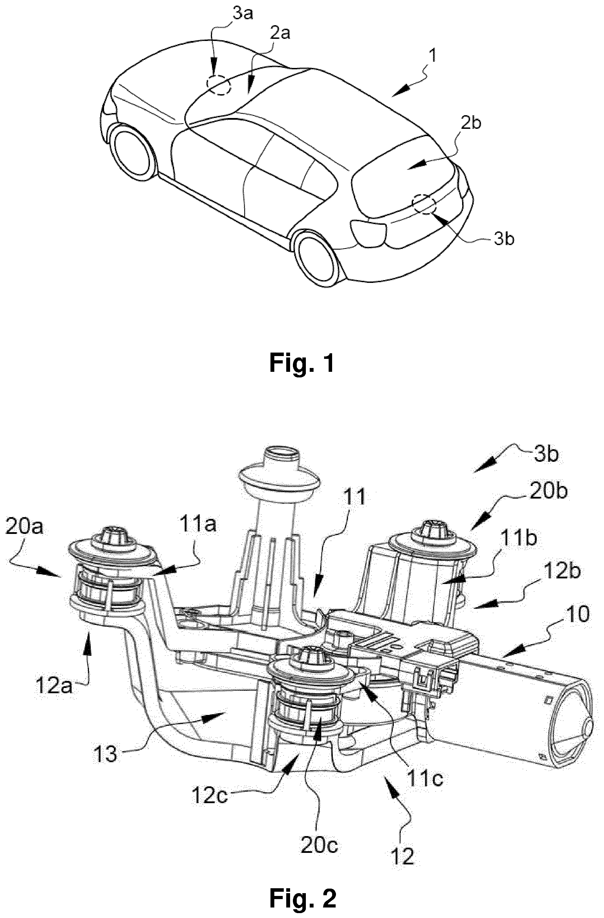

Figure 1 shows a perspective view of a motor vehicle 1 comprising at least one optical surface, here for example a front windscreen 2a and a rear windscreen 2b and at least one windscreen wiper mounting assembly, here for example a front windscreen wiper mounting assembly 3a and a rear windscreen wiper mounting assembly 3b.

These two wiper mounting assembly 3a and 3b are configured to be fixed to the vehicle body of the motor vehicle 1, respectively close to the front windscreen 2a and the rear windscreen 2b in order to clean respectively the front windscreen 2a and the rear windscreen 2b.

We refer to figure 2 illustrating a perspective view of an example of the rear windscreen wiper mounting assembly 3b.

The rear windscreen wiper mounting assembly 3b comprises
a support frame 12 having at least one upper arm, here for example three upper arms 12a, 12b, 12c and a central area 13 disposed in the middle of the upper arms 12a, 12b, 12c,
at least one securing device, here for example three securing devices 20a, 20b, 20c, each securing device 20a, 20b, 20c being configured to be disposed on a corresponding upper arm 12a, 12b, 12c,
a rear wiper motor 10 disposed over the central area 13, and
a motor cover 11 fixed to the rear wiper motor 10 and comprising three locking arms 11a, 11b, 11c, each locking arm 11a, 11b, 11c being fixed to a corresponding securing device 20a, 20b, 20c.

It is worth noting that the support frame 12 having said three upper arms 12a, 12b, 12c is here configured to facilitate the installation process of the securing devices 20a, 20b, 20c and is completely optional to the rear windscreen wiper mounting assembly 3b.

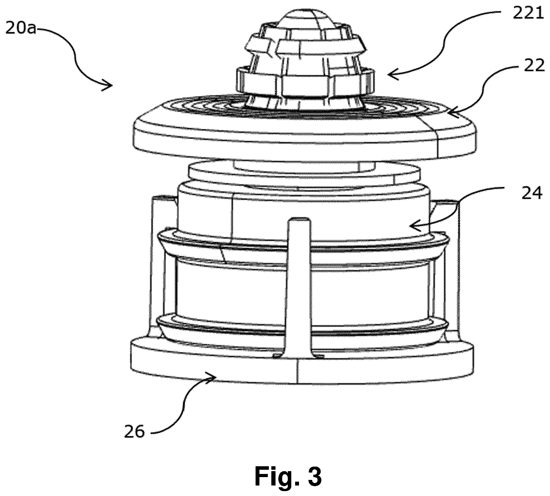

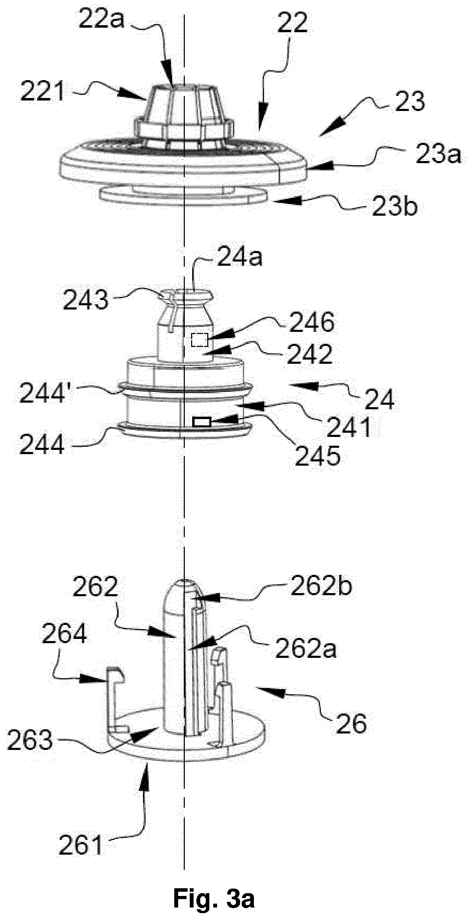

Figure 3 shows a perspective view of an example of a securing means, for example the securing means 20a, of the rear windscreen wiper mounting assembly 3b.

The securing means 20a illustrated in the figure 3 comprises a grommet 22, a middle connector 24 and a locking member 26 disposed in an assembled state.

The securing means 20a is adapted to present a first configuration and second configuration. The first configuration corresponds to a configuration of the securing means 20a for transport or delivery before the installation and the second configuration corresponds to a configuration of the securing means 20a once installed and fixed to the vehicle body of the motor vehicle 1.

For example, the securing means 20a illustrated in the figure 3 is in the second configuration.

Figure 3a illustrates an exploded view of the securing means 20a shown in the figure 3.

The grommet 22 comprises a grommet body 23 having a through orifice 22a.

The grommet body 23 is, for example, a round grommet body having a first panel 23a and a second panel 23b smaller than the first panel 23a. A concave space is formed between the first panel 23a and the second panel 23b and is configured to receive the corresponding locking arm 11a of the motor cover 11.

The grommet 22 comprises further a first expandable end 221 disposed in one end, here for example the end of the first panel 23a of the through orifice 22a.

The first expandable end 221 of the grommet 22 comprises a plurality of first clasping lips, here for example six clasping lips bent towards the center of the grommet 22 in a rest position. For example, these first clasping lips are made of material such as rubber so that they are flexible and expandable.

When the first expandable end 221 is in the rest position, the first clasping lips have a minimal dimension so that can be fitted into an installation hole disposed in the vehicle body, for example the tailgate, of the motor vehicle 1.

The middle connector 24 comprises a first fixing means 241 and an elongated segment 242 which is hollow and comprises a second expandable end 243 adapted to be inserted into the through orifice 22a of the grommet 22.

The second expandable end 243 comprises a plurality of second clasping lips, here for example, three second clasping lips. Just like the first clasping lips, the second clasping lips are bent towards the center of the elongated segment 242 in a rest position.

The first fixing means 241 comprises a first peripheral ring 244 and a second peripheral ring 244'. The second peripheral ring 244' is disposed closer to the elongated segment 242 with respect to the first peripheral ring 244.

The middle connector 24 is made of material such as plastics so that the second expandable end 243 can be flexible and in the same time, the first fixing means 241 can have enough strength to cooperate with the locking member 26.

The second expandable end 243 is configured to be inserted into the first expandable end 221 through the through orifice 22a of the grommet 22.

The locking member 26 comprises a second fixing means 261 and a pin 262 adapted to be inserted into the elongated segment 242.

The second fixing means 261 comprises a first base 263 having a dimension similar to that of the first and second peripheral rings 244, 244'. The first base 263 comprises a plurality of first locking clips 264, here for example three locking clips 264 equally disposed at the edge of the first base 263.

The first locking clips 264 are configured to engage the first peripheral ring 244 in the first configuration so that the locking member 26 can be fixed to the middle connector 24 for transport or delivery. Since the elongated segment 242 is configured to be inserted into the first expandable end 221, the securing means 20a can thus be securely transported in the first configuration without using any supplementary pieces.

By the way of preferable example with no limitation, the first peripheral ring 244 comprises at least one first protuberance 245, here for example one first protuberance 245 configured to limit free rotation of the first locking clips in the first configuration.

In addition, the locking member comprises a sliding groove 262a and an abutment groove 262b on the outer surface of the pin 262 and the middle connector 24 comprises a locking protuberance 246 on the inner surface of the elongated segment 242. The dimension of the locking protuberance 246 is adapted to pass through the sliding groove 262a and adapted to be fitted in the abutment groove 262b.

Such structure allows further securing the assembled secure means 20a in the first configuration. When the pin 262 is inserted into the elongated segment 242, the locking protuberance 246 is blocked in the abutment groove 262b so as to avoid that the pin is pushed too deep. Together with the first protuberance 245 and the first peripheral ring 244, this mechanism can ensure a reliable connection between the middle connector 24 and the locking member 26 in the first configuration.

Once the first expandable end 221 is inserted into an installation hole (not illustrated) of the vehicle body of the motor vehicle 1, it is possible to turn slightly pin to move the locking protuberance 246 out of the abutment groove 262b and then into the sliding groove 262a.

In this way, the pin 262 is pushed to pass through the first and second expandable ends 221 and 243. Due to the presence of the pin 262, the first and second expandable ends 221 and 243 are deformed and expanded. The outer dimension of the first expandable end 221 turns out to be greater than that of the installation hole. In other words, the secure means 20a is secured to the vehicle body in this second configuration without using any supplementary tool.

The grommet 22 is made of a first expandable material and the middle connector 24 is made of a second expandable material. In order to obtain a more important deformation of the first expandable end 221 of the grommet, the second expandable material is less expandable than the first expandable material.

By way of example with no limitation, the first expandable material is rubber and the second expandable material is plastic.

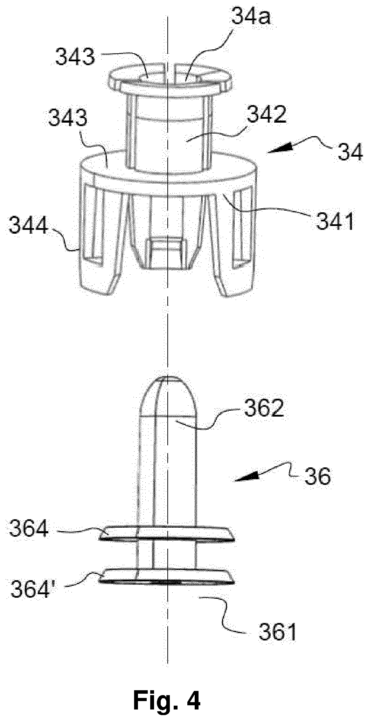

Figure 4 illustrates an exploded view of another example of the middle connector 34 and the locking member 36 of the securing means 20a.

The middle connector 34 comprises a first fixing means 341 and an elongated segment 342 that is hollow and comprises a second expandable end 343 having three second clasping lips as shown in the figure 4.

The locking member 36 comprises a second fixing means 361 and a pin 362 adapted to be inserted into the elongated segment 342.

Alternatively, the second fixing means 361 comprise a third peripheral ring 364 and a fourth peripheral ring 364'.

The first fixing means 341 comprises a second base 343 having a plurality of second locking clips 344, here three second locking clips 344, configured to engage the third peripheral ring 364 in the first configuration and the fourth peripheral ring 364' in the second configuration.

Though it is not shown in the figure 4, third peripheral ring 364 can also comprise at least one second protuberance to cooperate with the locking clips 344 to limit possible free rotation of the middle connector 34. The locking member 36 can also comprise a sliding groove and an abutment groove on the outer surface of the pin 36 and the middle connector 34 can comprise a locking protuberance on the inner surface of the elongated segment 342, as described above along with the figure 3a.

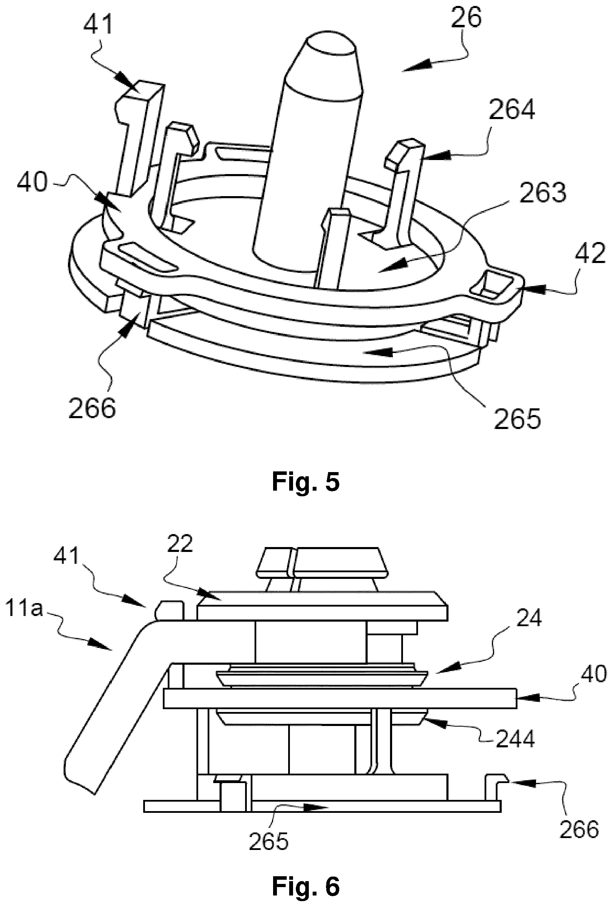

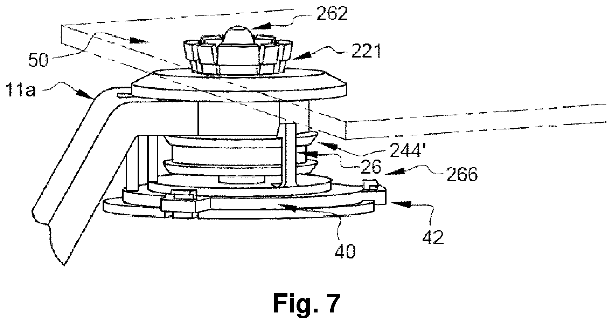

Figures 5 to 7 illustrate another example of rear windscreen wiper mounting assembly 3b.

Since the other parts of the rear windscreen wiper mounting assembly 3b are identical to the ones illustrated in the figures 2 to 3a. Here we only focus on the securing device 20a and the corresponding locking arm 11a.

The grommet 22 and the middle connector of the securing device 20a are identical to the ones illustrated the figures 3 and 3a. The pin 262 and the second fixing means 261 are also identical to the ones shown in the figure 3a.

The locking member 26 comprises further an auxiliary base 265 having a plurality of assembly clips 266, here for example three assembly clips 266. The auxiliary base has the same round form as the first base 263 but with a greater dimension, or in other words with a greater diameter. The three assembly clips 266 are equally disposed in the edge of the auxiliary base 265 and are shorter than the first locking clips 264.

The rear windscreen wiper mounting assembly 3b comprises further a locking ring 40 having an inner diameter corresponding to the outer diameter of the first locking clips 264 and configured to encircle the first locking clips when the securing device 20a is in the first configuration.

In other words, when the locking ring 40 encircle the first locking clips 264, the inner surface of the locking ring 40 is in contact or very close to the first locking clips 264.

The locking ring 40 comprises further a holding clip 41 configured to engage the corresponding locking arm 11a when the securing device 20a is in the first configuration.

In order to set the securing device 20a in the first configuration, the middle connector 24 is connected to the grommet 22 and the locking ring 40 encircles the first locking clips 264 of the locking member 26.

The locking clips 264 engages then the first peripheral ring 244 by pushing the locking member 26 into the middle connector 24. Once the locking arm 11a is connected to the securing device 20a. The locking ring 40 can then be raised to be fixed to the locking arm 11a by means of the holding clip 41, as shown in the figure 6.

Advantageously, the use of the locking ring 40 allows ensuring a stable and reliable connection between the first locking clips 264 and the first peripheral ring 244 in the first configuration. Any deviation of the first locking clips 264 can advantageously be avoided during the transport and delivery process of the rear windscreen wiper mounting assembly 3b.

As shown in the figure 5, the locking ring 40 comprises also a plurality of assembly rings 42 configured to engage the assembly clips 266 when the securing device 20a is in the second configuration.

When the securing device 20 is ready to be installed, the locking ring 40 is disengaged with the locking arm 11a to release the first locking clips 264. The assembly rings 42 of the locking ring 40 are then configured to engage the assembly clips 266 to make a stable connection between the locking ring 40 and the securing device 20a.

Finally, the first expanded end 221 is inserted into an installation hole of the vehicle body 50 and the pin 262 is pushed through the middle connector 24 and the grommet 22 to deform the first expanded end 221. The first locking clips 264 engage the second peripheral ring 244' to secure the position of the locking member 26 in the second configuration.

In consequence, the securing device 20a is fixed to the vehicle body 50 and in the second configuration.

## Claims

1. Securing device (20a, 20b, 20c) for a windscreen wiper mounting assembly (3b), comprising
a grommet (22) comprising a through orifice (22a) and a first expandable end (221) disposed in one end of the through orifice (22a);
**characterized by** further comprising
a middle connector (24, 34) comprising a first fixing means (241, 341) and an elongated segment (242, 342) being hollow and comprising a second expandable end (243, 343) adapted to be inserted into the through orifice (22a); and
a locking member (26, 36) comprising a second fixing means (261, 361) and a pin (262, 362) adapted to be inserted into the elongated segment (242, 342);
wherein the securing device (20a, 20b, 20c) is adapted to present
a first configuration in which the pin (262, 362) is partly inserted into the elongated segment (242, 342) which is inserted into the first expandable end (221) and the second fixing means (261, 361) engages the first fixing means (241, 341) so as to fix the locking member (26, 36) to the middle connector (24, 34), and
a second configuration in which the pin (262, 362) is pushed through the second expandable end (243, 343) which is inserted into the first expandable end (221, 321) so as to deform the first and second expandable ends (221, 243; 343).

2. Securing device (20a) according to the preceding claim, wherein the first expandable end (221) comprises a plurality of first clasping lips and the second expandable end (243, 343) comprises a plurality of second clasping lips configured to be inserted into the first clasping lips.

3. Securing device (20a) according to the preceding claim, wherein the first expandable end (221) comprises six first clasping lips and the second expandable end (243, 343) comprises three second clasping lips.

4. Securing device (20a) according to any of preceding claims, wherein the first fixing means (241) comprise a first peripheral ring (244) and a second peripheral ring (244'), and the second fixing means (261) comprises a first base (263) having a plurality of first locking clips (264) configured to engage the first peripheral ring (244) in the first configuration and the second peripheral ring (244') in the second configuration.

5. Securing device (20a) according to claim 3, wherein the first peripheral ring (244) has at least one first protuberance (245) to cooperate with the locking clips (264).

6. Securing device (20a, 20b, 20c) according to claim 4 or 5, wherein the second fixing means (261) comprises further an auxiliary base having a dimension greater than that of the first base (263) and a plurality of assembly clips (266) shorter than the first locking clips (264).

7. Securing device (20a) according to any of preceding claims 1 to 3, wherein the second fixing means (361) comprises a third peripheral ring (364) and a fourth peripheral ring (364'), and the first fixing means (341) comprises a second base (343) having a plurality of second locking clips (344) configured to engage the third peripheral ring (364) in the first configuration and the fourth peripheral ring (364') in the second configuration.

8. Securing device (20a) according to claim 7, wherein the third peripheral ring (364) has at least one second protuberance to cooperate with the locking clips (264).

9. Securing device (20a) according to any of preceding claims, wherein the locking member (26) comprises a sliding groove (262a) and an abutment groove (262b) on the outer surface of the pin (262) and the middle connector (24) comprises a locking protuberance (246) on the inner surface of the elongated segment (242), and wherein the locking protuberance is configured to pass through the sliding groove (262a) when the pin (262) is inserted into the elongated segment (242) and to be maintained in the abutment groove (262b) in the first configuration.

10. Securing device (20a) according to any of preceding claims, wherein the grommet (22) is made of a first expandable material and the middle connector (24, 34) is made of a second expandable material, the second expandable material being less expandable than the first expandable material.

11. Securing device (20a) according claim 10, where the first expandable material is rubber and the second expandable material is plastic.

12. Windscreen wiper mounting assembly for a motor vehicle (1) comprising a wiper motor (10), a support frame (12) configured to maintain the wiper motor (10) and at least one securing device (20a, 20b, 20c) according to any of preceding claims fixed to the support frame (12).

13. Windscreen wiper mounting assembly according to precedent claim in combination with claim 6, wherein the support frame (12) comprises at least one locking ring (40) having an inner dimension corresponding to the outer dimension of the first locking clips (264), each locking ring (264) being configured to be fixed to the support frame (12) and to encircle the first locking clips (264) of a corresponding securing device (20a, 20b, 20c) when the corresponding securing device (20a, 20b, 20c) is in the first configuration, each locking ring (40) being further configured to engage the assembly clips (266) of the corresponding securing device (20) when the corresponding securing device (20a, 20b, 20c) is in the second configuration.

14. Windscreen wiper mounting assembly according to claim 12 or 13, is a windscreen wiper mounting assembly (3b) for a rear windscreen of a motor vehicle (2b).

15. Motor vehicle comprising a windscreen wiper mounting assembly (3b) according to any of claims 12 to 14.

## Patentansprüche

1. Befestigungsvorrichtung (20a, 20b, 20c) für eine Scheibenwischermontagebaugruppe (3b), umfassend
eine Dichtung (22), die eine Durchgangsöffnung (22a) und ein erstes dehnbares Ende (221) umfasst, das in einem Ende der Durchgangsöffnung (22a) angeordnet ist;
**dadurch gekennzeichnet, dass** sie ferner umfasst
einen mittleren Verbinder (24, 34), der ein erstes Fixierungsmittel (241, 341) und ein längliches Segment (242, 342) umfasst, das hohl ist und ein zweites dehnbares Ende (243, 343) umfasst, das dazu ausgelegt ist, in die Durchgangsöffnung (22a) eingesetzt zu sein; und
ein Verriegelungselement (26, 36), das ein zweites Fixierungsmittel (261, 361) und einen Stift (262, 362) umfasst, der dazu ausgelegt ist, in das längliche Segment (242, 342) eingesetzt zu sein;
wobei die Befestigungsvorrichtung (20a, 20b, 20c) dazu ausgelegt ist, Folgendes vorzuweisen
eine erste Auslegung, in der der Stift (262, 362) teilweise in das längliche Segment (242, 342) eingesetzt ist, das in das erste dehnbare Ende (221) eingesetzt ist, und das zweite Fixierungsmittel (261, 361) das erste Fixierungsmittel (241, 341) derart in Eingriff nimmt, dass das Verriegelungselement (26, 36) an dem mittleren Verbinder (24, 34) fixiert ist, und
eine zweite Auslegung, in der der Stift (262, 362) durch das zweite dehnbare Ende (243, 343) gedrückt wird, das in das erste dehnbare Ende (221, 321) eingesetzt ist, so dass das erste und zweite dehnbare Ende (221, 243; 343) verformt werden.

2. Befestigungsvorrichtung (20a) nach dem vorhergehenden Anspruch, wobei das erste dehnbare Ende (221) eine Mehrzahl von ersten Klemmlippen umfasst und das zweite dehnbare Ende (243, 343) eine Mehrzahl von zweiten Klemmlippen umfasst, die dazu ausgelegt sind, in die ersten Klemmlippen eingesetzt zu sein.

3. Befestigungsvorrichtung (20a) nach dem vorhergehenden Anspruch, wobei das erste dehnbare Ende (221) sechs erste Klemmlippen umfasst und das zweite dehnbare Ende (243, 343) drei zweite Klemmlippen umfasst.

4. Befestigungsvorrichtung (20a) nach einem der vorhergehenden Ansprüche, wobei das erste Fixierungsmittel (241) einen ersten Umfangsring (244) und einen zweiten Umfangsring (244') umfasst, und das zweite Fixierungsmittel (261) eine erste Basis (263) mit einer Mehrzahl von Verriegelungsklammern (264) umfasst, die dazu ausgelegt sind, den ersten Umfangsring (244) in der ersten Auslegung und den zweiten Umfangsring (244') in der zweiten Auslegung in Eingriff zu nehmen.

5. Befestigungsvorrichtung (20a) nach Anspruch 3, wobei der erste Umfangsring (244) mindestens einen ersten Vorsprung (245) zum Zusammenwirken mit den Verriegelungsklammern (264) aufweist.

6. Befestigungsvorrichtung (20a, 20b, 20c) nach Anspruch 4 oder 5, wobei das zweite Fixierungsmittel (261) ferner eine zusätzliche Basis umfasst, die eine größere Abmessung als die erste Basis (263) und eine Mehrzahl von Montageklammern (266) aufweist, die kürzer als die ersten Verriegelungsklammern (264) sind.

7. Befestigungsvorrichtung (20a) nach einem der vorhergehenden Ansprüche 1 bis 3, wobei das zweite Fixierungsmittel (361) einen dritten Umfangsring (364) und einen vierten Umfangsring (364') umfasst, und das erste Fixierungsmittel (341) eine zweite Basis (343) mit einer Mehrzahl von zweiten Verriegelungsklammern (344) umfasst, die dazu ausgelegt sind, den dritten Umfangsring (364) in der ersten Auslegung und den vierten Umfangsring (364') in der zweiten Auslegung in Eingriff zu nehmen.

8. Befestigungsvorrichtung (20a) nach Anspruch 7, wobei der dritte Umfangsring (364) mindestens einen zweiten Vorsprung zum Zusammenwirken mit den Verriegelungsklammern (264) aufweist.

9. Befestigungsvorrichtung (20a) nach einem der vorhergehenden Ansprüche, wobei das Verriegelungselement (26) eine Gleitnut (262a) und eine Anschlagsnut (262b) auf der Außenfläche des Stifts (262) umfasst und der mittlere Verbinder (24) einen Verriegelungsvorsprung (246) auf der Innenfläche des länglichen Segments (242) umfasst, und wobei der Verriegelungsvorsprung dazu ausgelegt ist, durch die Gleitnut (262a) zu verlaufen, wenn der Stift (262) in das längliche Segment (242) eingesetzt ist, und in der Anschlagsnut (262b) in der ersten Auslegung gehalten zu sein.

10. Befestigungsvorrichtung (20a) nach einem der vorhergehenden Ansprüche, wobei die Dichtung (22) aus einem ersten dehnbaren Material besteht und der mittlere Verbinder (24, 34) aus einem zweiten dehnbaren Material besteht, wobei das zweite dehnbare Material weniger dehnbar als das erste dehnbare Material ist.

11. Befestigungsvorrichtung (20a) nach Anspruch 10, wobei das erste dehnbare Material Gummi ist und das zweite dehnbare Material Kunststoff ist.

12. Scheibenwischermontagebaugruppe für ein Kraftfahrzeug (1), umfassend einen Scheibenwischermotor (10), einen Stützrahmen (12), der dazu ausgelegt ist, den Scheibenwischermotor (10) zu halten, und mindestens eine Befestigungsvorrichtung (20a, 20b, 20c) nach einem der vorhergehenden Ansprüche, die an dem Stützrahmen (12) fixiert ist.

13. Scheibenwischermontagebaugruppe nach dem vorhergehenden Anspruch in Kombination mit Anspruch 6, wobei der Stützrahmen (12) mindestens einen Verriegelungsring (40) umfasst, der eine Innenabmessung aufweist, die der Außenabmessung der ersten Verriegelungsklammern (264) entspricht, wobei jeder Verriegelungsring (264) dazu ausgelegt ist, an dem Stützrahmen (12) fixiert zu sein und die ersten Verriegelungsklammern (264) einer entsprechenden Befestigungsvorrichtung (20a, 20b, 20c) zu umschließen, wenn sich die entsprechende Befestigungsvorrichtung (20a, 20b, 20c) in der ersten Auslegung befindet, wobei jeder Verriegelungsring (40) ferner dazu ausgelegt ist, die Montageklammern (266) der entsprechenden Befestigungsvorrichtung (20) in Eingriff zu nehmen, wenn sich die entsprechende Befestigungsvorrichtung (20a, 20b, 20c) in der zweiten Auslegung befindet.

14. Scheibenwischermontagebaugruppe nach Anspruch 12 oder 13, die eine Scheibenwischermontagebaugruppe (3b) für eine Heckscheibe eines Kraftfahrzeugs (2b) ist.

15. Kraftfahrzeug, umfassend eine Scheibenwischermontagebaugruppe (3b) nach einem der Ansprüche 12 bis 14.

## Revendications

1. Dispositif d'assujettissement (20a, 20b, 20c) pour un ensemble de support d'essuie-glace de pare-brise (3b), comprenant
un œillet (22) comprenant un orifice traversant (22a) et une première extrémité élargissable (221) disposée dans une extrémité de l'orifice traversant (22a) ;
**caractérisé en ce qu'**il comprend, en outre,
un élément de raccordement intermédiaire (24, 34) comprenant un premier moyen de fixation (241, 341) et un segment allongé (242, 342) qui est creux et comprend une seconde extrémité élargissable (243, 343) propre à être insérée dans l'orifice traversant (22a) ; et
un élément de verrouillage (26, 36) comprenant un second moyen de fixation (261, 361) et une goupille (262, 362) propre à être insérée dans le segment allongé (242, 342) ;
le dispositif d'assujettissement (20a, 20b, 20c) étant propre à être placé dans
une première configuration dans laquelle la goupille (262, 362) est partiellement insérée dans le segment allongé (242, 342) qui est inséré dans la première extrémité élargissable (221) et le second moyen de fixation (261, 361) entre en prise avec le premier moyen de fixation (241, 341) de manière à fixer l'élément de verrouillage (26, 36) à l'élément de raccordement intermédiaire (24, 34), et
une seconde configuration dans laquelle la goupille (262, 362) est poussée à travers la seconde extrémité élargissable (243, 343) qui est insérée dans la première extrémité élargissable (221, 321) de manière à déformer les première et seconde extrémités élargissables (221, 243 ; 343) .

2. Dispositif d'assujettissement (20a) selon la revendication précédente, dans lequel la première extrémité élargissable (221) comprend une pluralité de premières lèvres d'agrippement et la seconde extrémité élargissable (243, 343) comprend une pluralité de secondes lèvres d'agrippement conçues pour être insérées dans les premières lèvres d'agrippement.

3. Dispositif d'assujettissement (20a) selon la revendication précédente, dans lequel la première extrémité élargissable (221) comprend six premières lèvres d'agrippement et la seconde extrémité élargissable (243, 343) comprend trois secondes lèvres d'agrippement.

4. Dispositif d'assujettissement (20a) selon l'une quelconque des revendications précédentes, dans lequel le premier moyen de fixation (241) comprend un premier anneau périphérique (244) et un deuxième anneau périphérique (244'), et le second moyen de fixation (261) comprend une première base (263) comportant une pluralité de premiers crochets de verrouillage (264) conçus pour entrer en prise avec le premier anneau périphérique (244) dans la première configuration et avec le deuxième anneau périphérique (244') dans la seconde configuration.

5. Dispositif d'assujettissement (20a) selon la revendication 3, dans lequel le premier anneau périphérique (244) comporte au moins une première saillie (245) destinée à coopérer avec les crochets de verrouillage (264).

6. Dispositif d'assujettissement (20a, 20b, 20c) selon la revendication 4 ou 5, dans lequel le second moyen de fixation (261) comprend, en outre, une base auxiliaire plus grande que la première base (263) et comportant une pluralité de crochets d'assemblage (266) plus courts que les premiers crochets de verrouillage (264).

7. Dispositif d'assujettissement (20a) selon l'une quelconque des revendications précédentes 1 à 3, dans lequel le second moyen de fixation (361) comprend un troisième anneau périphérique (364) et un quatrième anneau périphérique (364'), et le premier moyen de fixation (341) comprend une seconde base (343) comportant une pluralité de seconds crochets de verrouillage (344) conçus pour entrer en prise avec le troisième anneau périphérique (364) dans la première configuration et avec le quatrième anneau périphérique (364') dans la seconde configuration.

8. Dispositif d'assujettissement (20a) selon la revendication 7, dans lequel le troisième anneau périphérique (364) comporte au moins une seconde saillie destinée à coopérer avec les crochets de verrouillage (264) .

9. Dispositif d'assujettissement (20a) selon l'une quelconque des revendications précédentes, dans lequel l'élément de verrouillage (26) comprend une rainure de coulissement (262a) et une rainure de butée (262b) sur la surface extérieure de la goupille (262) et l'élément de raccordement intermédiaire (24) comprend une saillie de verrouillage (246) sur la surface intérieure du segment allongé (242), et dans lequel la saillie de verrouillage est conçue pour traverser la rainure de coulissement (262a) lorsque la goupille (262) est insérée dans le segment allongé (242) et pour être maintenue dans la rainure de butée (262b) dans la première configuration.

10. Dispositif d'assujettissement (20a) selon l'une quelconque des revendications précédentes, dans lequel l'œillet (22) est fait d'un premier matériau expansible et l'élément de raccordement intermédiaire (24, 34) est fait d'un second matériau expansible, le second matériau expansible étant moins expansible que le premier matériau expansible.

11. Dispositif d'assujettissement (20a) selon la revendication 10, dans lequel le premier matériau expansible est du caoutchouc et le second matériau expansible est du plastique.

12. Ensemble de support d'essuie-glace de pare-brise pour un véhicule à moteur (1) comprenant un moteur d'essuie-glace (10), une structure de support (12) conçue pour maintenir le moteur d'essuie-glace (10) et au moins un dispositif d'assujettissement (20a, 20b, 20c) selon l'une quelconque des revendications précédentes fixé à la structure de support (12).

13. Ensemble de support d'essuie-glace de pare-brise selon la revendication précédente en combinaison avec la revendication 6, dans lequel la structure de support (12) comprend au moins un anneau de verrouillage (40) présentant une dimension intérieure correspondant à la dimension extérieure des premiers crochets de verrouillage (264), chaque anneau de verrouillage (264) étant conçu pour être fixé à la structure de support (12) et pour encercler les premiers crochets de verrouillage (264) d'un dispositif d'assujettissement (20a, 20b, 20c) correspondant lorsque le dispositif d'assujettissement (20a, 20b, 20c) correspondant se trouve dans la première configuration, chaque anneau de verrouillage (40) étant conçu, en outre, pour entrer en prise avec les crochets d'assemblage (266) du dispositif d'assujettissement (20) correspondant lorsque le dispositif d'assujettissement (20a, 20b, 20c) correspondant se trouve dans la seconde configuration.

14. Ensemble de support d'essuie-glace de pare-brise selon la revendication 12 ou 13, qui est un ensemble de support d'essuie-glace de pare-brise (3b) pour un pare-brise arrière (2b) d'un véhicule à moteur.

15. Véhicule à moteur comprenant un ensemble de support d'essuie-glace de pare-brise (3b) selon l'une quelconque des revendications 12 à 14.
